## Europäisches Patentamt

## European Patent Office

## Office européen des brevets

(19)

(11) **EP 1 086 547 B1**

(12)

# FASCICULE DE BREVET EUROPEEN

(45) Date de publication et mention
de la délivrance du brevet:
**28.09.2005 Bulletin 2005/39**

(21) Numéro de dépôt: **00917167.9**

(22) Date de dépôt: **07.04.2000**

(51) Int Cl.⁷: **H04L 9/06**

(86) Numéro de dépôt international:
**PCT/FR2000/000902**

(87) Numéro de publication internationale:
**WO 2000/062473 (19.10.2000 Gazette 2000/42)**

(54) **PROCEDE DE SECURISATION D'UN OU PLUSIEURS ENSEMBLES ELECTRONIQUES METTANT EN OEUVRE UN ALGORITHME CRYTOGRAPHIQUE AVEC CLE SECRETE, ET L'ENSEMBLE ELECTRONIQUE**

VERFAHREN ZUM SICHERN EINER ODER MEHRERER ELEKTRONISCHER BAUGRUPPEN, UNTER ZUHILFENAHME EINES PRIVATSCHLÜSSEL-KRYPTO-ALGORITHMUS, SOWIE ELEKTRONISCHE BAUGRUPPE

METHOD FOR MAKING SECURE ONE OR SEVERAL ELECTRONIC INSTALLATIONS USING A CRYPTOGRAPHIC SECRET KEY ALGORITHM, AND ELECTRONIC INSTALLATION

(84) Etats contractants désignés:
**AT BE CH CY DE DK ES FI FR GB GR IE IT LI LU MC NL PT SE**

(30) Priorité: **09.04.1999 FR 9904441**

(43) Date de publication de la demande:
**28.03.2001 Bulletin 2001/13**

(73) Titulaire: **CP8 TECHNOLOGIES**
**78431 Louveciennes (FR)**

(72) Inventeurs:
• **PATARIN, Jacques**
**F-78220 Viroflay (FR)**

• **GOUBIN, Louis**
**F-75015 Paris (FR)**

(74) Mandataire:
**Renault, Patricia Marie Jacqueline et al**
**Axalto SA**
**Direction Propriété Intellectuelle**
**36-38, rue de la Princesse**
**B.P. 45**
**78431 Louveciennes Cedex (FR)**

(56) Documents cités:
**WO-A-98/52319                FR-A- 2 672 402**

**Description**

La présente invention concerne un procédé de sécurisation d'un ou plusieurs ensembles électroniques mettant en oeuvre un même algorithme cryptographique avec clé secrète, et l'ensemble électronique. Plus précisément, le procédé vise à faire dépendre d'une donnée secrète la manière dont le calcul sera effectué, cette donnée pouvant être différente selon l'ensemble électronique qui intervient ou selon la clé secrète qui est utilisée. L'objectif est de permettre aux ensembles électroniques de ne pas être vulnérables face à un certain type d'attaques physiques dites "Differential Key Differential Power Analysis", en abrégé DKDPA qui cherchent à obtenir des informations sur une clé secrète à partir de l'étude de la consommation électrique du (ou des) ensemble(s) électronique(s) sur plusieurs exécutions du calcul avec des clés secrètes différentes, dont au moins une est connue de l'attaquant (par exemple s'il a eu pour au moins un de ces calculs la possibilité de fixer lui-même la clé secrète).

Les algorithmes cryptographiques considérés ici utilisent une clé secrète pour calculer une information de sortie en fonction d'une information d'entrée ; il peut s'agir d'une opération de chiffrement, de déchiffrement ou de signature ou de vérification de signature, ou d'authentification ou de non-répudiation. Ils sont construits de manière à ce qu'un attaquant, connaissant les entrées et les sorties, ne puisse en pratique déduire aucune information sur la clé secrète elle-même.

On s'intéresse donc à une classe plus large que celle traditionnellement désignée par l'expression algorithmes à clé secrète ou algorithmes symétriques. En particulier, tout ce qui est décrit dans la présente demande de brevet s'applique également aux algorithmes dits à clé publique ou algorithmes asymétriques, qui comportent en fait deux clés : l'une publique, et l'autre secrète, cette dernière étant celle visée par les attaques décrites ci-dessous.

Les attaques de type Analyse de Puissance Electrique, Power Analysis en langage anglo-saxon, développées par Paul Kocher et Cryptographic Research (Confer document Introduction to Differential Power Analysis and Related Attacks by Paul Kocher, Joshua Jaffe, and Benjamin Jun, Cryptography Research, 870 Market St., Suite 1008, San Francisco, CA 94102, édition du document HTML à l'adresse URL :

   http://www.cryptography.com/dpa/technical/index.html,

introduit dans la présente demande à titre de référence), partent de la constatation qu'en réalité l'attaquant peut acquérir des informations, autres que la simple donnée des entrées et des sorties, lors de l'exécution du calcul, comme, par exemple, la consommation électrique du microcontrôleur ou le rayonnement électromagnétique émis par le circuit.

L'analyse d'énergie électrique différentielle, Differential Power Analysis en langage anglo-saxon, en abrégé DPA, est une attaque permettant d'obtenir des informations sur la clé secrète contenue dans l'ensemble électronique, en effectuant une analyse statistique des enregistrements de consommation électrique effectués sur un grand nombre de calculs avec cette même clé.

On considère, à titre d'exemple non limitatif, le cas de l'algorithme DES (Data Encryption Standard), dont on peut trouver une description dans l'un des documents suivants :

   FIPS PUB 46-2, Data Encryption Standard, 1994 ;
   FIPS PUB 74, Guidelines for Implementing and Using the NBS Data Encryption Standard, 1981 ;
   ANSI X3.92, American National Standard, Data Encryption Algorithm, 1981 ;
   ISO/IEC 8731:1987, Banking - Approved Algorithms for Message Authentication - Part 1 : Data Encryption Algorithm (DEA).

   ou encore dans l'ouvrage suivant :

   Bruce Schneier, Applied Cryptography, 2ème édition, John Wiley & Sons, 1996, page 270.

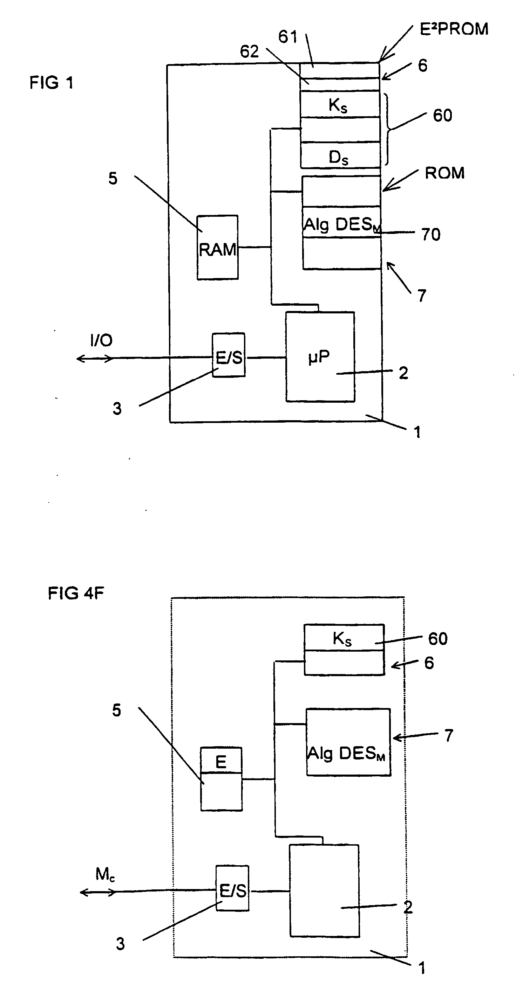

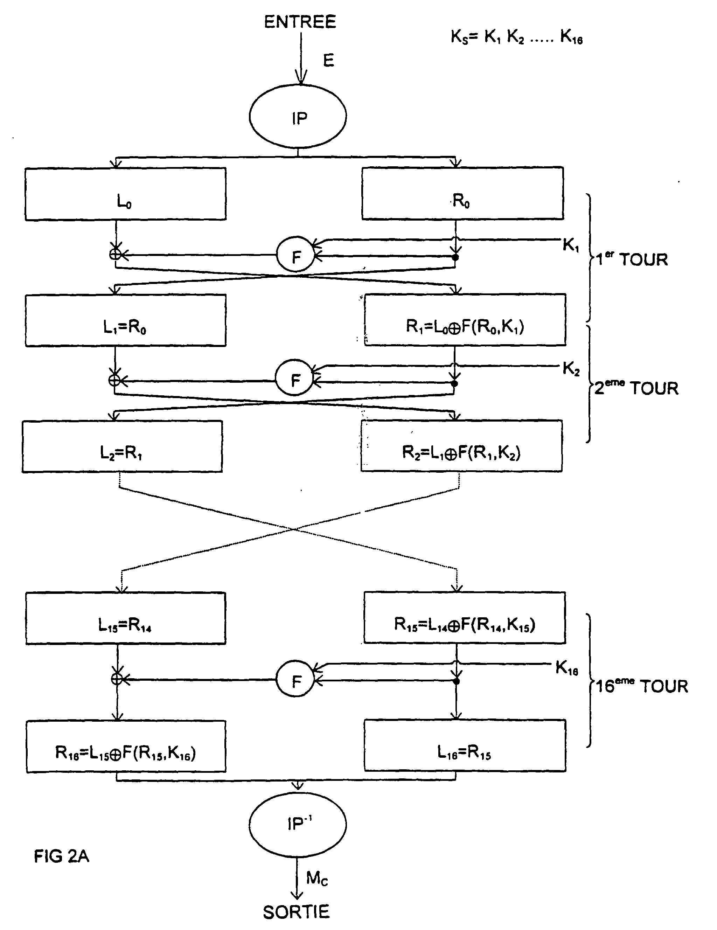

L'algorithme DES se déroule en 16 étapes appelées tours, représentés figure 2A. Dans chacun des 16 tours, une transformation F est effectuée sur 32 bits $(R_i)$, qui dans le premier tour constituent la moitié $(R_0)$ du message d'entrée (E). Dans chacun des tours, une partie $(R_i)$ formée de 32 bits de l'information à crypter est combinée dans la fonction F avec une partie $(K_i)$ formée de 32 bits de la clé secrète de cryptage (Ks). Cette fonction F met en oeuvre à chaque tour huit transformations non linéaires de 6 bits sur 4 bits, notées (fig.1 b2b) $S_1$, $S_2$, ..., $S_8$, qui sont codées, mémorisées chacune dans une table de codage appelée boîte S. Ces huit boîtes S sont identiques pour toutes les cartes ou pour tous les ensembles électroniques. Seule la clé de cryptage change d'une carte à l'autre ou d'un ensemble électronique à l'autre. Chaque boîte S est un tableau à 64 ($2^6$) lignes de quatre colonnes de 1 bit. Bien évidemment ces tables peuvent être arrangées différemment en mémoire pour permettre des gains de place.

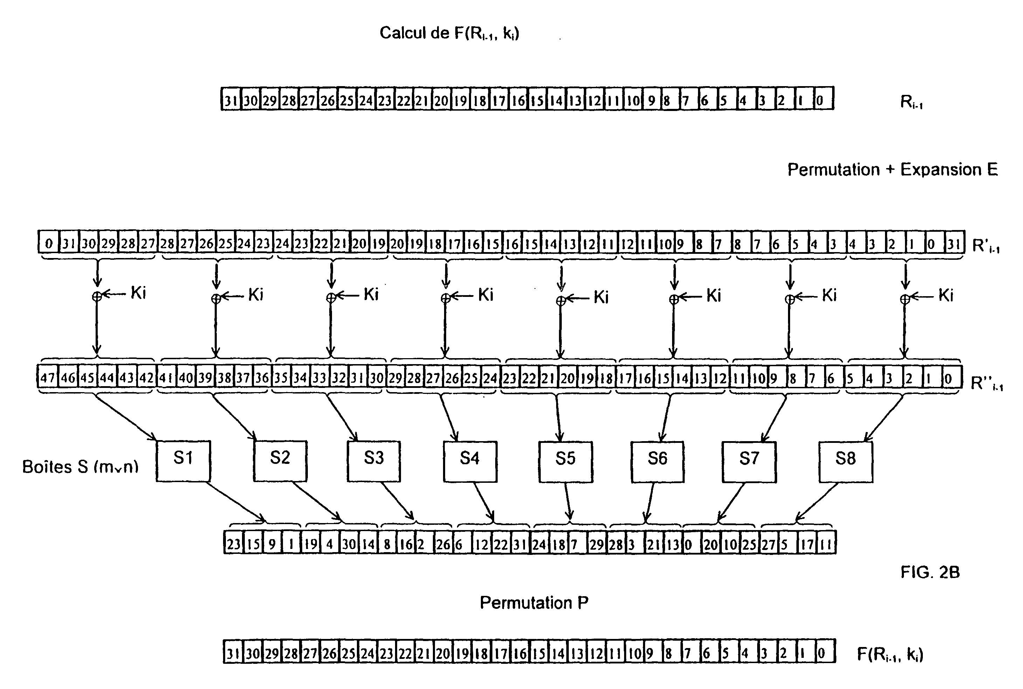

Par construction de l'algorithme DES, on constate figure 2B que les transformations qu'effectue la fonction F sur l'information de 32 bits constituant $(R_i)$ peuvent toujours entrer dans l'une des catégories suivantes :

-    permutation des bits de $R_i$ ; puis expansion à 48 bits de $R_i$, pour obtenir l'information $R_i'$ ;

- OU-exclusif de $R_i'$ avec une variable $K_i$ dépendant uniquement de la clé ou d'une sous-clé ; pour obtenir un résultat $R_i''$ sur 48 bits ;

- transformation non linéaire de $R_i''$ par application sur chaque portion de 6 bits constituant $R_i''$ d'une boite S différente ;

- permutation dite P (cette permutation est définie et imposée par le standard DES) sur les 32 bits sortant de l'ensemble constitué par les huit boites S, ($S_1$ à $S_8$) ;

Le résultat obtenu par l'application de la fonction F est combiné dans un OU-exclusif avec soit les 32 autres bits du message, soit les 32 bits du résultat fourni à l'étape i-2, de façon à respecter la relation $R_i = R_{i-2} \oplus F(R_{i-1}, Ki)$ figure 2A.

L'attaque de type DPA sur le DES peut être mise en oeuvre sur le DES de la manière suivante :

1 ère étape : On fait des mesures de consommation sur le premier tour, ceci pour 1000 calculs de DES. On note E[1], ..., E[1000] les valeurs d'entrée de ces 1000 calculs. On note C[1], ..., C[1000] les 1000 courbes correspondantes de consommation électrique mesurées lors de ces calculs. On calcule également la courbe moyenne CM des 1000 courbes de consommation.

2ème étape : On s'intéresse, par exemple, au premier bit de sortie de la première boîte S lors du premier tour. Notons b la valeur de ce bit. Il est facile de voir que b ne dépend que de 6 bits de la clé secrète. L'attaquant fait une hypothèse sur les 6 bits concernés. Il calcule, à partir de ces 6 bits et des E[i], les valeurs théoriques attendues pour b. Cela permet de séparer les 1000 entrées E[1], ..., E[1000] en deux catégories : celles qui donnent b=0 et celles qui donnent b=1.

3ème étape : On calcule maintenant la moyenne CM' des courbes correspondant à des entrées de la première catégorie, c'est-à-dire pour lesquelles b=0. Si CM et CM' présentent une différence notable, on considère que les valeurs retenues pour les 6 bits de clé étaient les bonnes. Si CM et CM' ne présentent pas de différence sensible, au sens statistique, c'est-à-dire pas de différence nettement supérieure à l'écart type du bruit mesuré, on recommence la 2ème étape avec un autre choix pour les 6 bits.

4ème étape : On répète les étapes 2 et 3 avec un bit cible b issu de la deuxième boite S, puis de la troisième boite S, ..., jusqu'à la huitième boîte S. On obtient donc finalement 48 bits de la clé secrète.

5ème étape : Les 8 bits restants peuvent être trouvés par recherche exhaustive.

Cette attaque ne nécessite aucune connaissance sur la consommation électrique individuelle de chaque instruction, ni sur la position dans le temps de chacune de ces instructions. Elle s'applique de la même manière si on suppose que l'attaquant connaît des sorties de l'algorithme et les courbes de consommation correspondantes. Elle repose uniquement sur l'hypothèse fondamentale selon laquelle :

Hypothèse fondamentale : il existe une variable intermédiaire, apparaissant dans le cours du calcul de l'algorithme, telle que la connaissance de quelques bits de clé, en pratique moins de 32 bits, permet de décider si deux entrées, respectivement deux sorties, donnent ou non la même valeur pour cette variable.

Tous les algorithmes utilisant des boites S, tels le DES, sont potentiellement vulnérables à la DPA, car les modes de réalisation usuels restent en général dans le cadre de l'hypothèse mentionnée ci-dessus.

Les attaques dites par analyse d'énergie électrique de haut niveau, High-Order Differential Power Analysis en langage anglo-saxon, en abrégé HO-DPA, sont une généralisation de l'attaque DPA décrite précédemment. Elles peuvent utiliser plusieurs sources d'information différentes, outre la consommation elles peuvent mettre en jeu les mesures de rayonnement électromagnétique, de température, etc. et mettre en oeuvre des traitements statistiques plus sophistiqués que la simple notion de moyenne, des variables intermédiaires (généralisant le bit b défini ci-dessus) moins élémentaires. Néanmoins, elles reposent exactement sur la même hypothèse fondamentale que la DPA.

Une solution, pour supprimer les risques d'attaques DPA ou HO-DPA, consiste, pour un processus de calcul cryptographique avec clé secrète Ks, à modifier le mode de réalisation de l'algorithme, de manière que l'hypothèse fondamentale précitée ne soit plus vérifiée, aucune variable intermédiaire calculée ne dépendant plus de la connaissance d'un sous-ensemble aisément accessible de la clé secrète.

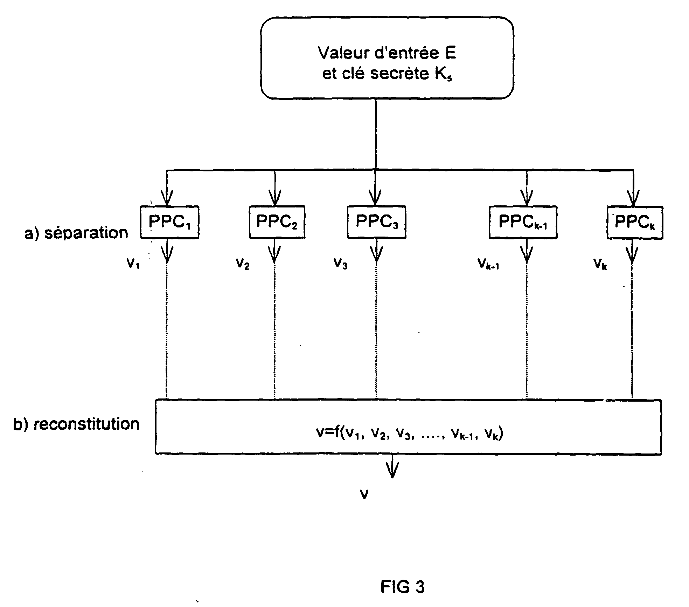

Dans ce but, premièrement le processus de calcul cryptographique est séparé dans l'ensemble électronique en plusieurs parties de processus de calcul $PPC_1$ à $PPC_k$ (fig.3) distinctes conduites parallèlement, puis deuxièmement la valeur finale V correspondant à celle obtenue par le calcul cryptographique en l'absence de séparation, est reconstituée dans l'ensemble électronique à partir des résultats partiels intermédiaires v1 à vk obtenus par la mise en oeuvre des parties de processus de calcul distinctes $PPC_1$ à $PPC_k$ précitées.

Cette séparation est réalisée par l'algorithme de calcul modifié qui remplace chaque variable v intermédiaire, intervenant dans le cours du calcul et dépendant des données d'entrée (ou de sortie), par k variables $v_1$, $v_2$, ..., $v_k$, telles que $v_1$, $v_2$, ..., et $v_k$ permettent, au besoin, de reconstituer v. Plus précisément, cela signifie qu'il existe une fonction f permettant de déterminer v, tel que $v=f(v_1, v_2, ..., v_k)$ et que la séparation mise en oeuvre par l'algorithme modifié satisfait cette fonction. On suppose en outre que f satisfait, de préférence, la première condition suivante :

Condition n°1 : Soit i un indice compris (au sens large) entre 1 et k. La connaissance d'une valeur v ne permet jamais en pratique de déduire des informations sur l'ensemble des valeurs vi telles qu'il existe un (k-1)-uplet $(v_1, ..., v_{i-1}, v_{i+1}, ..., v_k)$ satisfaisant l'équation $f(v_1, ..., v_k)=v$ ;

On fait alors une « traduction » de l'algorithme en remplaçant chaque variable intermédiaire V dépendant des données d'entrée (ou de sortie) par les k variables $v_1$, $v_2$, ... , $v_k$.

Pour garantir la sécurité maximale de l'algorithme modifié sous sa nouvelle forme, on impose la condition supplémentaire suivante (condition n°2) sur la fonction f :

Condition n°2 : La fonction f est telle que les transformations à effectuer sur $v_1$, $v_2$, ..., ou $v_k$ au cours du calcul, à la place des transformations effectuées habituellement sur v, peuvent être implémentées sans avoir à recalculer v.

Reprenons l'exemple de l'algorithme DES. Une mise en oeuvre concrète de la méthode décrite ci-dessus consiste à construire l'algorithme de calcul modifié $DES_M$ pour qu'il sépare chaque variable v intermédiaire, intervenant dans le cours du calcul et dépendant des données d'entrée ou de sortie, en, par exemple, deux variables $v_1$ et $v_2$, c'est-à-dire que l'on prend k=2. On considère la fonction $f(v_1, v_2)= v = v_1 \oplus v_2$ de l'exemple n°1 ci-dessus, qui satisfait par construction la condition n°1. Par construction de l'algorithme DES, on constate facilement que les transformations qu'il effectue sur v peuvent toujours entrer dans l'une des cinq catégories suivantes :

- permutation des bits de v ;

- expansion des bits de v ;

- OU-exclusif de v avec une autre variable v' du même type ;

- OU-exclusif de v avec une variable c dépendant uniquement de la clé ou d'une sous-clé ;

- transformation non linéaire de v par une boite S.

Les deux premières catégories correspondent à des transformations linéaires sur les bits de la variable v. Pour celles-ci, la condition n°2 est donc très facile à vérifier et il suffit, à la place de la transformation effectuée habituellement sur v, d'effectuer la permutation ou l'expansion sur $v_1$, puis sur $v_2$, et la relation $f(v_1, v_2)= v$ qui était vraie avant la transformation reste vraie également après.

De même, dans le troisième cas, il suffit de remplacer le calcul $v'' = v \oplus v'$ par celui de $v''_1 = v_1 \oplus v'_1$ et de $v''_2 = v_2 \oplus v'_2$. Les relations $f(v_1, v_2)= v$ et $f(v'_1, v'_2)= v'$ donnent bien $f(v''_1, v''_2) = v''$, et la condition n°2 est encore vérifiée.

En ce qui concerne le OU-exclusif de v avec une variable c dépendant uniquement de la clé ou d'une sous-clé, la condition n°2 est aussi très facile à satisfaire : il suffit de remplacer le calcul de $v \oplus c$ par $v_1 \oplus c$, ou $v_2 \oplus c$, ce qui assure la condition n°2.

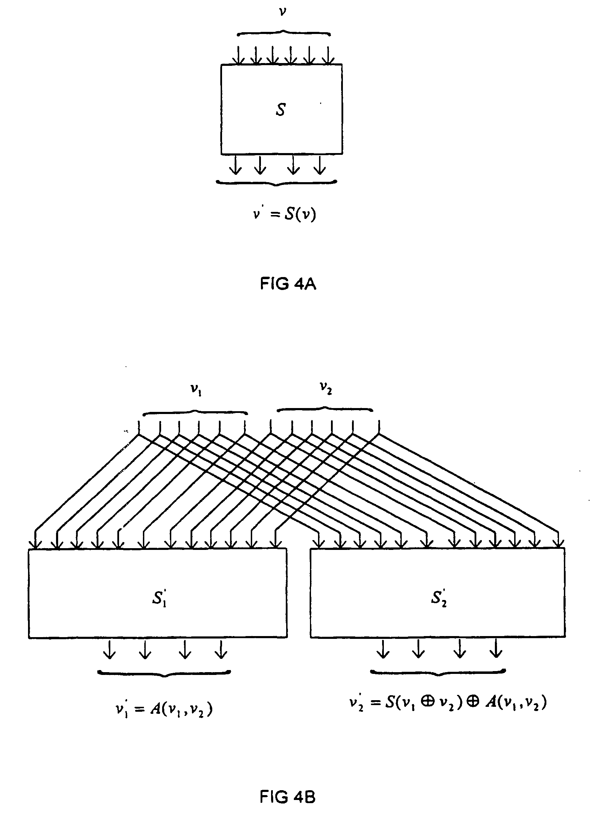

Enfin, à la place de la transformation non-linéaire de l'art antérieur v'=S(v) donnée, représentée figure 4A et réalisée sous la forme d'une boite S, qui, dans cet exemple, admet des entrées de 6 bits et donne des sorties de 4 bits, l'ensemble électronique réalise la transformation (v'1,v'2)=S'(v1,v2) dans une variante de réalisation au moyen de deux nouvelles boites S, chacune pouvant avoir la forme d'un tableau cette fois de 12 bits sur 4 bits. Pour garantir l'égalité f(v'1, v'2) = v', il suffit de choisir :

$$(v'_1, v'_2) = S'(v_1, v_2) = (A(v_1, v_2), S(v_1 \oplus v_2) \oplus A(v_1, v_2))$$

c'est-à-dire $v'_1 = A(v_1, v_2)$ et $v'_2 = S(v_1 \oplus v_2) \oplus A(v_1, v_2)$
où A désigne une transformation aléatoire et secrète de 12 bits vers 4 bits. La première (nouvelle) boîte S ($S'_1$ fig.4b) correspond à la table de la transformation $(v_1, v_2) \rightarrow A(v_1, v_2)$ qui à $(v_1, v_2)$ associe $A(v_1, v_2)$ et la seconde (nouvelle)

boite S (S'$_2$) correspond à la table de la transformation $(v_1, v_2) \rightarrow S(v_1 \oplus v_2) \oplus A(v_1, v_2)$ qui à $(v_1, v_2)$ associe $S(v_1 \oplus v_2) \oplus A(v_1, v_2)$. La présence de la fonction aléatoire A permet de garantir la condition n°1. L'utilisation de tables permet par ailleurs d'éviter d'avoir à calculer $v_1 \oplus v_2$ et, par là, permet de satisfaire la condition n°2.

Les tables de transformation ou de conversion peuvent être mémorisées dans une mémoire ROM de la carte à microcalculateur lorsque l'ensemble électronique est constitué par une carte à microcalculateur.

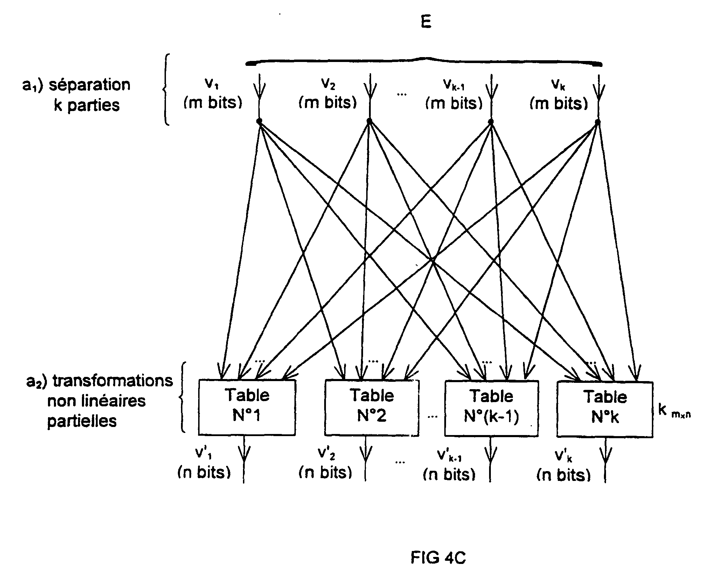

Ainsi, pour une étape de calcul du type transformation non linéaire mise en oeuvre par un processus de calcul cryptographique classique tel que le DES, la séparation, ainsi que représenté en figure 4C, peut être effectuée en k parties. Par rapport à un processus de calcul cryptographique classique utilisant des transformations non linéaires de m bits sur n bits, décrites par des tables de conversion dans lesquelles les n bits de sortie de la transformation sont lus à une adresse fonction des m bits d'entrée, l'algorithme de calcul cryptographique modifié DES$_M$ remplace chaque transformation non linéaire de m bits sur n bits du processus de calcul cryptographique classique appliquée à une variable intermédiaire de m bits jouant le rôle de variable d'entrée E, en l'absence de séparation, par une pluralité k de transformations non linéaires partielles de km bits sur n bits appliquées chacune à une variable intermédiaire partielle de l'ensemble k des variables intermédiaires partielles $v_1$ à $v_k$ de m bits. Selon un aspect particulièrement remarquable du procédé objet de l'invention, cette transformation non linéaire partielle est décrite et réalisée par k tables de conversion partielle dans lesquelles chacun des n bits de sortie de chaque table constitue, respectivement la variable v'$_1$, la variable v'$_2$ ...,...la variable v'$_k$ de la transformation et sont lus à une adresse fonction d'un des k groupes des km bits d'entrée.

Dans l'exemple du DES précité et en relation avec la figure 4C, on indique que k=2, n=4 et m=6.

Selon une première variante, pour des raisons d'encombrement de la ROM, on peut tout à fait utiliser la même fonction aléatoire A pour chacune des huit boîtes S de la description classique du DES, ce qui permet de n'avoir que neuf nouvelles boîtes S à stocker au lieu de seize.

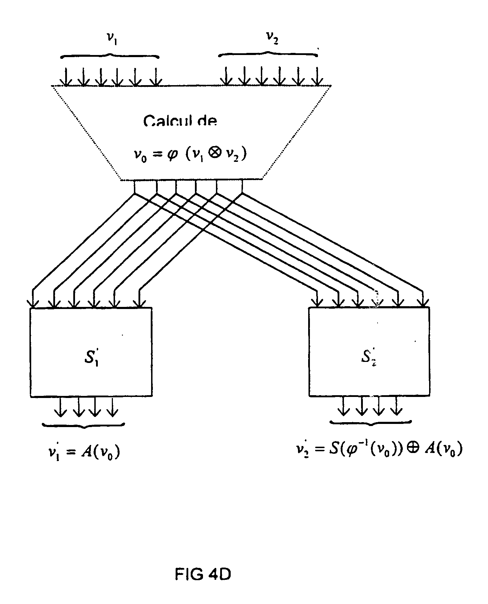

Une deuxième variante, appelée variante n°2, sera décrite en liaison avec la figure 4D.

Afin de réduire la taille de la ROM nécessaire pour stocker les boites S, on peut, à la place de chaque transformation non-linéaire v'=S(v) de l'implémentation initiale donnée sous la forme d'une boîte S (qui dans l'exemple du DES admet des entrées de 6 bits et donne des sorties de 4 bits), également utiliser la méthode suivante qui réalise dans cette deuxième variante, la transformation $(v'_1, v'_2)=S'(v_1, v_2)$ au moyen de deux boîtes S, $(S'_1; S'_2)$ contenant chacune une table de 6 bits sur 4 bits. La mise en oeuvre initiale du calcul de v'=S(v) est remplacée dans l'algorithme modifié par les deux calculs successifs suivants :

- $v_0 = \varphi(v_1 \oplus v_2)$

qui utilise une fonction $\varphi$ bijective et secrète de 6 bits sur 6 bits, et

- $(v'_1, v'_2) = S'(v_1, v_2) = (A(v_0), S(\varphi^{-1}(v_0)) \oplus A(v_0))$

c'est-à-dire v'1 = A(v0), v'2 = $S(\varphi^{-1}(v_0)) \oplus A(v_0$

où A désigne une transformation aléatoire et secrète de 6 bits vers 4 bits. La première (nouvelle) boîte S (référencée S'$_1$ sur la figure 4D) correspond à la table de la transformation $v_0 \rightarrow A(v_0)$ qui à v0 associe A(v0) et la seconde (nouvelle) boîte S (référencée S'$_2$ sur la figure 4D) correspond à la table de la transformation $v_0 \rightarrow S(\varphi^{-1}(v_0)) \oplus A(v_0)$ qui à v0 associe $S(\varphi^{-1}(v_0)) \oplus A(v_0)$. Par construction, on a toujours l'égalité f(v'$_1$, v'$_2$)= v'. La présence de la fonction aléatoire A permet de garantir la condition n°1. L'utilisation de tables permet d'éviter d'avoir à calculer $\varphi^{-1}(v_0)=v_1 \oplus v_2$.

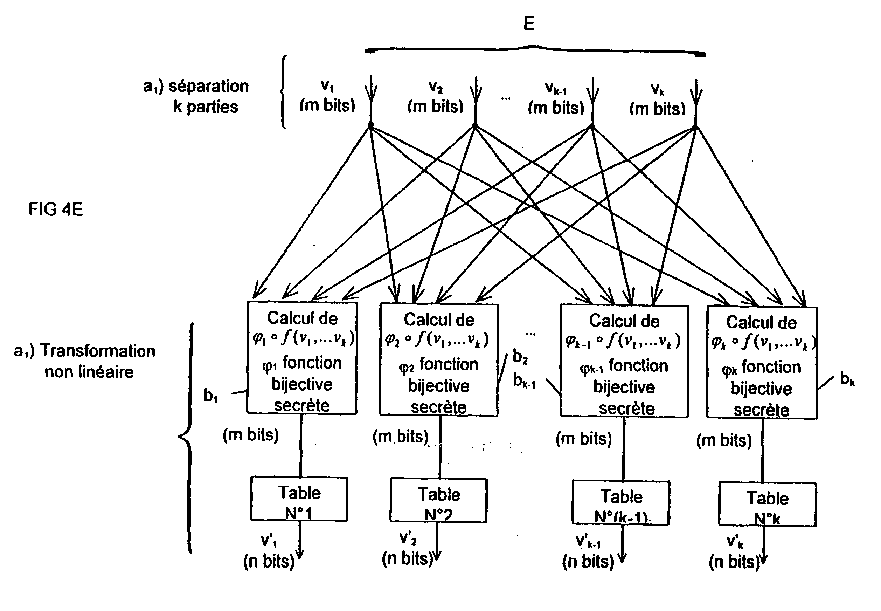

Sur la figure 4E, on a représenté une étape de calcul correspondante, de type transformation non linéaire mise en oeuvre dans le cadre du processus de calcul cryptographique classique comme le DES, tel que modifié conformément au procédé objet de l'invention selon la variante n°2. Outre la séparation en k parties appliquée à la variable d'entrée E, pour les transformations non linéaires de m bits sur n bits, décrites par des tables de conversion dans lesquelles les n bits de sortie sont lus à une adresse fonction des m bits d'entrée, le processus de calcul cryptographique est modifié en remplaçant chaque transformation non linéaire de m bits sur n bits appliquée à une variable intermédiaire de m bits, jouant le rôle de variable d'entrée E, du processus de calcul classique par une transformation non linéaire partielle de km bits sur kn bits appliquée sur l'ensemble k des variables intermédiaires partielles v1 à vk de m bits. Cette transformation non linéaire partielle est décrite et réalisée par k tables de conversion de km bits par n bits, chacune des entrées des tables de conversion recevant une valeur obtenue par application d'une fonction bijective secrète $\varphi_j$ à la fonction $f(v_1, ..., v_k)$ des variables intermédiaires partielles suivant la relation $\varphi_j \, o \, f(v_1, ..., v_k)$, avec $j \in [1,k]$. L'application précitée $\varphi_j \, o \, f(v_1, ..., v_k)$ est effectuée par évaluation directe d'une valeur résultante, laquelle, appliquée à l'entrée de la table de conversion correspondante 1 à k, permet de lire n bits de sortie de la transformation v'$_1$ ou v'$_2$ ou ... v'k à une adresse qui est fonction de ces m bits d'entrée.

De même que dans le premier exemple précité, et en relation avec la figure 4E, on indique que pour la variante n°2, k=2, m=6 et n=4.

En outre, dans une version simplifiée, les fonctions bijectives $\varphi_1$ à $\varphi_k$ sont identiques.

Pour que la condition n°2 soit satisfaite, il reste à choisir la transformation bijective $\varphi$ ou des fonctions bijectives $\varphi_1$ à $\varphi_k$ de telle sorte que le calcul de $v_0 = \varphi(v_1 \oplus v_2)$ puisse se faire sans avoir à recalculer $v_1 \oplus v_2$. Deux exemples de choix pour la fonction $\varphi$ sont donnés ci-après :

Exemple 1 : Une bijection $\varphi$ linéaire

On choisit pour $\varphi$ une fonction linéaire secrète et bijective de 6 bits sur 6 bits. Dans le cadre d'un tel choix, on considère l'ensemble des valeurs sur 6 bits comme un espace vectoriel de dimension 6 sur le corps fini $F_2$ à deux éléments. En pratique, choisir $\varphi$ revient à choisir une matrice aléatoire et inversible de taille 6x6 dont les coefficients valent 0 ou 1. Avec ce choix de $\varphi$, il est facile de voir que la condition n°2 est satisfaite. En effet, pour calculer $\varphi(v_1 \oplus v_2)$, il suffit de calculer $\varphi(v_1)$, puis $\varphi(v_2)$, et enfin de calculer le "OU-exclusif" des deux résultats obtenus.

Par exemple, la matrice

$$\begin{pmatrix} 1 & 1 & 0 & 1 & 0 & 0 \\ 1 & 1 & 0 & 1 & 0 & 1 \\ 0 & 1 & 1 & 0 & 1 & 0 \\ 1 & 1 & 1 & 0 & 1 & 0 \\ 0 & 1 & 1 & 1 & 1 & 0 \\ 0 & 0 & 1 & 1 & 0 & 1 \end{pmatrix}$$

est inversible. Il lui correspond la bijection linéaire $\varphi$ de 6 bits sur 6 bits définie par :

- $\varphi(u_1, u_2, u_3, u_4, u_5, u_6) = (u_1 \oplus u_2 \oplus u_4, u_1 \oplus u_2 \oplus u_4 \oplus u_6, u_2 \oplus u_3 \oplus u_5, u_1 \oplus u_2 \oplus u_3 \oplus u_5, u_2 \oplus u_3 \oplus u_4 \oplus u_5, u_3 \oplus u_4 \oplus u_6)$

Si on note $v_1 = (v_{1,1}, v_{1,2}, v_{1,3}, v_{1,4}, v_{1,5}, v_{1,6})$ et $v_2 = (v_{2,1}, v_{2,2}, v_{2,3}, v_{2,4}, v_{2,5}, v_{2,6})$, pour calculer $\varphi(v_1 \oplus v_2)$, on calcule successivement :

- $\varphi(v_1) = (v_{1,1} \oplus v_{1,2} \oplus v_{1,4}, v_{1,1} \oplus v_{1,2} \oplus v_{1,4} \oplus v_{1,6}, v_{1,2} \oplus v_{1,3} \oplus v_{1,5}, v_{1,1} \oplus v_{1,2} \oplus v_{1,3} \oplus v_{1,5}, v_{1,2} \oplus v_{1,3} \oplus v_{1,4} \oplus v_{1,5}, v_{1,3} \oplus v_{1,4} \oplus v_{1,6})$ ;
- $\varphi(v_2) = (v_{2,1} \oplus v_{2,2} \oplus v_{2,4}, v_{2,1} \oplus v_{2,2} \oplus v_{2,4} \oplus v_{2,6}, v_{2,2} \oplus v_{2,3} \oplus v_{2,5}, v_{2,1} \oplus v_{2,2} \oplus v_{2,3} \oplus v_{2,5}, v_{2,2} \oplus v_{2,3} \oplus v_{2,4} \oplus v_{2,5}, v_{2,3} \oplus v_{2,4} \oplus v_{2,6})$.

Puis on calcule le "OU-exclusif" des deux résultats obtenus.

Exemple 2 : Une bijection $\varphi$ quadratique

On choisit pour $\varphi$ une fonction quadratique secrète et bijective de 6 bits sur 6 bits. Le terme "quadratique" signifie ici que chaque bit de valeur de sortie de la fonction $\varphi$ est donné par une fonction polynomiale de degré deux des 6 bits d'entrée, qui sont identifiés à 6 éléments du corps fini $F_2$. En pratique, on peut choisir la fonction $\varphi$ définie par la formule $\varphi(x) = t(s(x)^5)$, où s est une application linéaire secrète et bijective de $(F_2)^6$ sur L, t est une application linéaire secrète et bijective de L sur $(F_2)^6$, et où L désigne une extension algébrique de degré 6 du corps fini F2. Le caractère bijectif de cette fonction $\varphi$ résulte du fait que a $\rightarrow$ a5 est une bijection sur l'extension L (dont l'inverse est b $\rightarrow$ b38). Pour établir que la condition n°2 est encore satisfaite, il suffit de remarquer que l'on peut écrire :

$$\varphi(v_1 \oplus v_2) = \psi(v_1, v_1) \oplus \psi(v_1, v_2) \oplus \psi(v_2, v_1) \oplus \psi(v_2, v_2)$$

où la fonction $\psi(x, y) = t(s(x)^4 \cdot s(y))$.

Par exemple, si on identifie L à F2[X]/(X^6+X+1), et si on prend s et t de matrices respectives

$$\begin{pmatrix} 1 & 1 & 0 & 1 & 0 & 0 \\ 1 & 1 & 0 & 1 & 0 & 1 \\ 0 & 1 & 1 & 0 & 1 & 0 \\ 1 & 1 & 1 & 0 & 1 & 0 \\ 0 & 1 & 1 & 1 & 1 & 0 \\ 0 & 0 & 1 & 1 & 0 & 1 \end{pmatrix} \text{ et } \begin{pmatrix} 0 & 1 & 0 & 0 & 1 & 1 \\ 1 & 1 & 0 & 1 & 0 & 0 \\ 1 & 0 & 1 & 0 & 1 & 1 \\ 0 & 1 & 1 & 1 & 0 & 0 \\ 1 & 0 & 1 & 0 & 1 & 0 \\ 0 & 0 & 1 & 0 & 1 & 1 \end{pmatrix}$$

par rapport à la base (1, X, X2, X3, X4, X5) de L sur F2 et à la base canonique de $(F_2)^6$ sur F2, on obtient la bijection quadratique φ de 6 bits sur 6 bits suivante :

$$\varphi(u_1, u_2, u_3, u_4, u_5, u_6) =$$

$$(u_2u_5 \oplus u_1u_4 \oplus u_4 \oplus u_6 \oplus u_6u_2 \oplus u_4u_6 \oplus u_2 \oplus u_5 \oplus u_3 \oplus u_4u_3 ,$$

$$u_2u_5 \oplus u_5u_1 \oplus u_1u_4 \oplus u_4 \oplus u_6 \oplus u_4u_5 \oplus u_2 \oplus u_3 \oplus u_3u_1 ,$$

$$u_2u_5 \oplus u_5u_1 \oplus u_6u_5 \oplus u_1u_4 \oplus u_3u_5 \oplus u_1 \oplus u_4u_6 \oplus u_6u_3 \oplus u_4u_3 \oplus u_3u_1,$$

$$u_1u_4 \oplus u_2u_3 \oplus u_6u_1 \oplus u_4u_6 \oplus u_5 \oplus u_6u_3 \oplus u_4u_3,$$

$$u_5u_1 \oplus u_1u_4 \oplus u_6 \oplus u_3u_5 \oplus u_4u_5 \oplus u_1 \oplus u_6u_1 \oplus u_4u_6 \oplus u_3 \oplus u_6u_3 \oplus u_4u_2$$

$$u_4 \oplus u_6 \oplus u_3u_5 \oplus u_1 \oplus u_4u_6 \oplus u_6u_3).$$

Pour calculer $\varphi(v_1 \oplus v_2)$, on utilise la fonction $\psi(x, y) = t(s(x)^4 \cdot s(y))$ de 12 bits sur 6 bits, qui donne les 6 bits de sortie en fonction des 12 bits d'entrée selon les règles suivantes :

$$\psi(x_1, x_2, x_3, x_4, x_5, x_6, y_1, y_2, y_3, y_4, y_5, y_6) =$$

$$(x_3y_5 \oplus x_6y_2 \oplus x_6y_3 \oplus x_6y_4 \oplus x_3y_1 \oplus x_6y_1 \oplus x_1y_3 \oplus x_1y_5 \oplus x_5y_2 \oplus x_5y_5 \oplus$$

$$x_5y_1 \oplus x_6y_6 \oplus x_1y_6 \oplus x_1y_2 \oplus x_1y_4 \oplus x_2y_1 \oplus x_2y_2 \oplus x_4y_4 \oplus x_3y_3 \oplus x_3y_6 \oplus x_4y_3 \oplus$$

$$x_5y_3 ,$$

$$x_4y_5 \oplus x_3y_1 \oplus x_6y_1 \oplus x_2y_5 \oplus x_5y_1 \oplus x_6y_6 \oplus x_1y_6 \oplus x_1y_2 \oplus x_2y_1 \oplus x_2y_2 \oplus$$

$$x_4y_1 \oplus x_4y_4 \oplus x_3y_3 ,$$

$$x_6y_2 \oplus x_6y_3 \oplus x_6y_4 \oplus x_6y_5 \oplus x_3y_1 \oplus x_6y_1 \oplus x_2y_5 \oplus x_5y_1 \oplus x_1y_6 \oplus x_1y_1 \oplus$$

$$x_1y_2 \oplus x_1y_4 \oplus x_2y_1 \oplus x_2y_4 \oplus x_4y_2 \oplus x_2y_6 \oplus x_3y_4 \oplus x_5y_3 ,$$

$$x_3y_1 \oplus x_6y_2 \oplus x_2y_6 \oplus x_5y_3 \oplus x_5y_4 \oplus x_5y_6 \oplus x_6y_3 \oplus x_2y_3 \oplus x_4y_6 \oplus x_5y_5 \oplus$$

$$x_1y_3 \oplus x_5y_5 \oplus x_2y_4 \oplus x_4y_2 \oplus x_4y_5 \oplus x_3y_5 \oplus x_4y_3 \oplus x_6y_1 \oplus x_4y_1 ,$$

$$x_3y_1 \oplus x_6y_6 \oplus x_5y_3 \oplus x_5y_6 \oplus x_5y_2 \oplus x_1y_5 \oplus x_1y_1 \oplus x_1y_2 \oplus x_2y_1 \oplus x_2y_3 \oplus$$

$$x_3y_6 \oplus x_6y_5 \oplus x_1y_3 \oplus x_2y_4 \oplus x_3y_3 \oplus x_4y_5 \oplus x_2y_5 \oplus x_6y_1 \oplus x_4y_1 \oplus x_6y_4 \oplus x_3y_2 ,$$

$$x_6 y_6 \oplus x_4 y_4 \oplus x_5 y_4 \oplus x_5 y_6 \oplus x_6 y_3 \oplus x_1 y_6 \oplus x_1 y_1 \oplus x_1 y_2 \oplus x_2 y_1 \oplus x_6 y_5 \oplus$$

$$x_2 y_4 \oplus x_4 y_2 \oplus x_4 y_5 \oplus x_3 y_5 \oplus x_6 y_1 \oplus x_6 y_4).$$

En utilisant ces formules, on calcule successivement :

- $\psi(v_1, v_1)$ ;

- $\psi(v_1, v_2)$ ;

- $\psi(v_2, v_1)$ ;

- $\psi(v_2, v_2)$.

Puis on calcule le "OU-exclusif" des quatre résultats obtenus.

Dans une troisième variante, toujours pour réduire la taille ROM nécessaire pour stocker les boites S, on peut enfin appliquer simultanément les idées des deux variantes précédentes, variante n°1 et variante n°2 : on utilise la variante 2, avec la même bijection secrète φ (de 6 bits vers 6 bits) et la même fonction aléatoire secrète A (de 6 bits vers 6 bits) dans la nouvelle implémentation de chaque transformation non-linéaire donnée sous la forme d'une boite S.

L'inconvénient de la solution décrite précédemment pour parer aux attaques DPA est qu'elle est vulnérable à une attaque DKDPA

L'utilisation de la méthode de sécurisation décrite ci-dessus permet de rendre inopérantes les attaques DPA ou HO-DPA. Néanmoins, le nouveau mode de réalisation de l'algorithme cryptographique avec clé secrète peut être vulnérable à une autre attaque que nous appelons dans la suite Differential Key and Differential Power Analysis en langage anglo-saxon, en abrégé DKDPA, alors que l'attaque DPA classique échoue. Nous décrivons maintenant le principe général de cette attaque.

On suppose que l'attaquant possède un petit nombre d'ensembles électroniques, pour chacun desquels il connaît la clé secrète de l'algorithme cryptographique qu'il met en oeuvre. Pour chaque ensemble électronique, bien qu'il connaisse déjà la clé secrète, il applique l'attaque DPA, exactement comme s'il ne connaissait pas la clé secrète. En suivant le principe décrit précédemment, il fait une hypothèse sur 6 bits de la clé et, pour chaque choix de ces 6 bits, il obtient 64 courbes représentant des différences de courbes moyennes de consommation.

Pour certains modes de réalisation de l'algorithme, il est alors possible que la DPA montre des phénomènes inhabituels pour certains choix de ces 6 bits de clé (c'est-à-dire des pics ou des creux inhabituels pour l'une des 64 courbes). Bien sûr, ce choix particulier des 6 bits de clé ne correspond pas à la vraie clé, mais le « OU-exclusif » entre ces 6 bits (notons-les K') et les 6 bits correspondants de la vraie clé (notons-les K) se trouvent souvent être une constante C, c'est-à-dire que l'on a toujours : K⊕ K'=C, pour chaque ensemble électronique dont l'attaquant connaît la clé secrète.

Si c'est bien le cas, l'attaquant peut alors facilement trouver les bits d'une vraie clé inconnue : il applique l'attaque DPA standard, puis note les choix particuliers K' des 6 bits qui donnent une courbe inhabituelle, et enfin en déduit K en calculant K=K' ⊕ C, où C a été obtenu précédemment.

Un des buts de l'invention est de remédier à cette vulnérabilité aux attaques DKDPA des ensembles électroniques.

Une étude plus précise montre que les attaques de type DKDPA décrites ci-dessus sont rendues possibles par le fait que le mode de réalisation du processus de calcul cryptographique mis en oeuvre par le ou les ensembles électroniques est toujours le même, quel que soit l'élément électronique mis en jeu et quelle que soit la clé secrète utilisée par le processus cryptographique.

La présente invention a pour objet la suppression des risques d'attaques DKDPA d'ensembles ou systèmes électroniques utilisant un processus de calcul cryptographique avec clé secrète.

Cet objet est atteint par le procédé selon la revendication 1 et l'ensemble électronique selon la revendication 6. Des modes particuliers de réalisation de l'invention sont définis dans les revendications dépendantes.

Le procédé de sécurisation d'un ou plusieurs ensembles électroniques mettant en oeuvre un processus de calcul cryptographique avec clé secrète de cryptage, objet de la présente invention, est remarquable en ce que le mode de réalisation du processus de calcul cryptographique avec clé secrète de cryptage est dépendant d'une donnée secrète.

D'autres particularités et avantages de la présente invention seront mieux compris à la lecture de la description faite en référence aux dessins ci-après dans lesquels :

- la figure 1 représente un ensemble électronique dans lequel l'algorithme de cryptage modifié est utilisé selon le procédé de l'invention ;

- les figures 2A et 2B représentent schématiquement le processus de chiffrement/ déchiffrement DES ( *"Data Encryption Standard"* en langage anglo-saxon) de l'art antérieur ;

- la figure 3 représente un organigramme général illustratif d'un procédé de partition selon une précédente invention ;

- la figure 4A représente, de manière illustrative, un mode de mise en oeuvre du procédé de l'art antérieur dans un algorithme de cryptage DES classique ;

- la figure 4B représente un organigramme d'une mise en oeuvre particulière d'un processus de calcul cryptographique modifié tel que le $DES_M$ selon une précédente invention;

- la figure 4C représente une variante de mise en oeuvre d'un procédé tel qu'illustré en figure 3 ;

- la figure 4D représente une variante de mise en oeuvre d'un procédé tel qu'illustré en figure 4b ;

- la figure 4E représente une autre mise en oeuvre particulière d'un procédé d'une précédente invention, à partir d'une transformation bijective secrète, appliquée à une transformation non linéaire utilisée dans un processus de calcul cryptographique modifié tel que le $DES_M$;

- la figure 4F représente un ensemble électronique dans lequel l'algorithme de cryptage classique de l'art antérieur est mis en oeuvre.

L'invention sera décrite ci-après en liaison avec la figure 1 et en la comparant à la réalisation de l'art antérieur représentée à la figure 4F.

Un ensemble électronique peut être constitué d'un module électronique sécuritaire implanté dans un dispositif plus vaste, tel que, par exemple, un serveur ou un terminal. Cet ensemble électronique peut être constitué d'un ou plusieurs circuits intégrés incorporés dans le dispositif plus vaste ou encore d'une carte à puce dénommée généralement « smart card » lorsqu'elle comporte un microprocesseur ou microcontrôleur connecté au dispositif plus vaste par un connecteur à contact ou sans contact. Un algorithme de cryptage classique tel que, par exemple, le DES peut être installé dans la mémoire non volatile, par exemple, de type ROM (7) de l'ensemble électronique (1). Le microprocesseur (2) de cet ensemble électronique (1) exécute cet algorithme en lisant, par le bus (4) le reliant aux différentes mémoires, les instructions contenues dans la mémoire morte (7) pour effectuer les étapes du procédé de cryptage décrit en relation avec les figures 2A et 2B en combinant la clé secrète (Ks) de cryptage contenue dans une zone secrète (60) d'une mémoire non volatile de l'ensemble électronique, par exemple, programmable (6) de type $E^2PROM$, avec les informations E à crypter qui sont, par exemple, mémorisées momentanément dans une mémoire volatile (5), par exemple, de type RAM. Le microprocesseur associé dans un seul circuit intégré à ses mémoires RAM, ROM, $E^2PROM$ constitue ce que l'on nomme un microcontrôleur ou microcalculateur. Le microprocesseur dialogue avec le dispositif plus vaste à travers un circuit d'entrée-sortie (3) et aucun accès à la zone déclarée secrète (60) de la mémoire non volatile n'est autorisé par un circuit autre que le microprocesseur (2). Lui seul peut lire la clé( Ks) et l'utiliser conformément au procédé de cryptage classique décrit à l'aide des figures 2A et 2B pour produire le message crypté Mc=DES (E,Ks).

L'invention consiste à modifier l'algorithme de mise en oeuvre du cryptage pour constituer un algorithme modifié ($DES_M$) qui respecte les mêmes phases que le processus de calcul de l'algorithme classique (DES). Ainsi, dans le cas du DES, l'algorithme modifié effectue une séparation du processus de calcul cryptographique du DES classique en plusieurs parties de processus de calcul distinctes conduites parallèlement et mettant en oeuvre des résultats partiels intermédiaires (appelés variables partielles) distincts de ceux du calcul cryptographique classique et cette séparation est effectuée par utilisation de données secrètes (Ds) contenues dans la zone secrète (60) de mémoire (6) de l'ensemble électronique (1). Cet algorithme modifié produit un résultat Mc par reconstitution de la valeur finale à partir des résultats partiels intermédiaires, tel que Mc=$DES_M$(E,Ks,Ds)=DES(E,Ks), égal au résultat qui aurait été obtenu par l'algorithme classique. On remarquera que les ensembles électroniques ainsi obtenus sont entièrement compatibles avec ceux ayant un cryptage classique (ci-après dénommés ensembles classiques) et peuvent donc être utilisés à la place des ensembles classiques dans les applications ou endroits où les ensembles classiques risqueraient d'être exposés à une attaque, sans avoir besoin de changer ceux qui sont dans des locaux sécurisés.

Cet algorithme modifié comporte des moyens secrets de remplacer chaque variable intermédiaire de l'algorithme classique en plusieurs variables intermédiaires partielles et des moyens d'appliquer à chacune de ces variables intermédiaires partielles une table de transformation non linéaire et des moyens secrets de reconstituer le résultat final correspondant à l'utilisation de l'algorithme de cryptage classique à partir des résultats obtenus sur les variables partielles. Ainsi, comme un fraudeur ne connaîtra plus la relation entre les variables partielles et le résultat final, il ne sera plus en mesure de découvrir la clé secrète de cryptage (Ks) par une attaque DPA.

Par exemple, dans le cas de la méthode de sécurisation de l'algorithme DES décrite plus haut, on fait dépendre le mode de réalisation du processus de calcul cryptographique modifié de la donnée des k tables de conversion utilisées pour le calcul de chaque transformation non linéaire de km bits sur kn bits. Ces k tables constituent la donnée secrète (Ds). En outre, dans le cas des variantes 2 et 3, on fait également dépendre le mode de réalisation du processus de calcul cryptographique de la donnée des applications bijectives secrètes $\varphi_1, \varphi_2, ..., \varphi_k$ faisant également partie de la donnée secrète.

Ainsi, l'algorithme modifié fera appel, dans les phases de calcul où cela s'avère nécessaire, à la fonction bijective secrète contenue dans la donnée secrète (Ds) et dans d'autres phases de calcul aux tables de conversion également contenues dans la donnée secrète.

Dans le cas de l'exemple de l'algorithme DES décrit ci-dessus, la façon d'utiliser cette donnée secrète est publique.

Il est bien évident que l'invention a été illustrée dans le cas de l'algorithme de cryptage dénommé DES, mais le même principe et le même procédé peuvent être mis en oeuvre avec tout autre procédé de cryptage connu, tel que le triple DES ou encore le RSA.

Afin de rendre inopérantes les attaques de type DKDPA sur le ou les ensembles électroniques, il faut en outre choisir une donnée secrète (Ds) qui ne soit pas toujours la même d'un ensemble électronique à l'autre ou lors de l'utilisation d'une clé secrète ou d'une autre. Pour cette raison, il est préférable de la mettre dans une mémoire programmable de façon à pouvoir la changer facilement d'un ensemble électronique à l'autre. Dans l'exemple du DES ci-dessus, on constate qu'il est facile de choisir une nouvelle valeur pour la donnée secrète parmi les k tables de conversion utilisées pour le calcul de chaque transformation non linéaire de km bits sur kn bits ; on peut, par exemple, choisir (k-1) tables de manière aléatoire, puis déduire la kème table par un calcul simple. Dans le cas des variantes n°2 et n°3, on peut de même choisir (k-1) tables aléatoirement et les applications bijectives secrètes $\varphi_1, \varphi_2, ..., \varphi_k$ également aléatoirement, puis en déduire la kème table, toujours par un calcul simple.

Dans ce cas ou le ou les ensembles électroniques sont une ou des cartes à microcalculateurs, la donnée secrète (Ds), dont dépend le mode de réalisation du processus cryptographique avec clé secrète, peut être stockée dans la mémoire $E^2PROM$ (6). Cela permet de la modifier d'une carte à l'autre, lors du processus de personnalisation de la carte, au cours duquel sont en général introduites une ou plusieurs clés secrètes dans la mémoire $E^2PROM$ de ladite carte. On peut également modifier cette donnée secrète inscrite dans la mémoire $E^2PROM$, si l'on est amené à changer une ou plusieurs des clés secrètes contenues dans la carte.

Dans la version la plus forte de l'invention, la donnée secrète dépend à la fois de la carte à microcalculateur considérée, et de la clé secrète utilisée par le processus de calcul cryptographique. Par exemple, la donnée secrète est choisie aléatoirement à chaque fois que l'on introduit une clé secrète dans une carte. Cela aboutit en fait à introduire à chaque fois un couple (clé secrète Ks, donnée secrète Ds) dans la mémoire $E^2PROM$ de la carte à microcalculateur, au lieu d'introduire seulement la clé secrète. Dans une variante de réalisation de l'invention donnée à titre d'exemple illustratif mais non limitatif, la donnée secrète comporte au moins une première variable aléatoire $v_1$ constituant au moins une variable partielle secrète, l'algorithme modifié détermine au moins une autre variable partielle, par exemple $v_2$, par l'application d'une fonction secrète sur la variable intermédiaire v et la ou les variables partielles secrètes $v_1$. Cette fonction secrète peut, par exemple, être un OU-exclusif tel que :

$$v_2 = v_1 \oplus v.$$

L'algorithme modifié applique les transformations non linéaires aux variables partielles v1 et v2 par utilisation des tables dont au moins une A, formée par tirage aléatoire, est mémorisée dans la donnée secrète Ds, les autres tables nécessaires aux calculs pouvant être mémorisées dans la mémoire non volatile. Les différents tours de calcul de l'algorithme classique sont effectués en mettant en oeuvre à chaque fois les tables sur les variables partielles et au dernier tour l'algorithme calcule le résultat par combinaison des variables partielles selon une seconde fonction secrète qui peut être l'inverse de la précédente.

Toutes les variantes décrites en références aux figures 3 à 4F font également partie de l'invention en incorporant un ou plusieurs des éléments intervenant dans la modification de l'algorithme, dans la donnée secrète contenue en mémoire non volatile programmable (6). Les éléments qui interviennent dans la modification de l'algorithme sont soit la fonction secrète f, soit des tables de conversion partielles, soit une table de conversion secrète aléatoire A associée par un calcul à d'autres tables de conversion contenues dans une partie non secrète de mémoire programmable (6) ou non (7), soit une fonction polynomiale et une ou plusieurs tables de conversion, soit une fonction bijective

secrète φ et une transformation aléatoire secrète A, soit encore une fonction quadratique secrète.

Dans une autre variante de réalisation de l'invention, le programme de calcul des boites S ou tables de conversion, présent normalement sur les machines de personnalisations, pourra être téléchargé ou inscrit en phase de pré-personnalisation dans la zone secrète (61) de la mémoire (6) non volatile programmable E$^2$PROM et déclenché en phase de personnalisation par un ordre venant de l'extérieur, exécutable une fois seulement en phase de personnalisation. Une fois l'ordre exécuté le programme de calcul soit positionne un verrou en mémoire non-volatile interdisant l'accès à ce programme sans la. présentation d'une clé spécifique, soit dans une autre réalisation déclenche l'auto effacement de cette zone secrète (61). Cette variante permet de mettre en oeuvre l'invention même avec des machines de personnalisation non modifiées. Le calcul des boites S ou tables de conversion se fera en respectant les principes énoncés plus haut et en utilisant comme diversifiant une information propre à la carte en cours de personnalisation, telle que le numéro de série de la carte qui avait été enregistré en phase de pré-personnalisation, les valeurs obtenues par ce calcul sont écrites dans la donnée secrète (60) de la zone secrète de la mémoire non-volatile (6).

Dans une autre variante supplémentaire la carte comporte un compteur supplémentaire (62) en mémoire non-volatile, qui est incrémenté par l'algorithme DES$_M$, à chaque exécution d'un calcul DES par ce dernier. Le système d'exploitation de la carte est prévu pour comparer le contenu de ce compteur à une valeur déterminée n à chaque mise sous tension de la carte et pour appeler le programme (61) de calcul pour calculer de nouvelles boites S ou tables de conversion dans le cas où la valeur n est dépassée. Le système d'exploitation de la carte ou le programme de calcul assure la mémorisation des boites-S dans la donnée secrète selon une procédure définie par le programme de calcul (61) ou le système d'exploitation et remet à zéro le compteur. Par ailleurs l'algorithme DES$_M$ vérifie dans cette variante, avant d'effectuer un calcul DES que le compteur supplémentaire (62) n'a pas dépassé la valeur (n+c) déterminée augmentée d'une constante, dans laquelle c est une constante définie. En cas de dépassement il conclut à une tentative de fraude et provoque une remise à zéro de la carte

Enfin il est clair que dans tous les modes de réalisation exposés, la manière dont le calcul de cryptage sera conduit dépendra de la modification de l'algorithme DES$_M$ qui elle-même dépend des éléments contenus dans la zone secrète de mémoire.

**Revendications**

**1.** Procédé de sécurisation d'un ou plusieurs ensembles électroniques (1) mettant en oeuvre un même algorithme cryptographique avec dé secrète (Ks) de cryptage, chaque ensemble électronique (1) comportant des moyens de mémorisation (6) pour stocker ladite dé secrète (Ks) de cryptage et une unité de traitement (2) pour exécuter ledit algorithme cryptographique sur une information (E), le procédé comprenant des phases de calcul d'un premier processus de calcul cryptographique de type connu utilisant ladite clé secrète (Ks) de cryptage et ladite information (E) et étant **caractérisé en ce qu'**il comprend, pour chaque ensemble électronique (1) :

- une étape de stockage d'une donnée secrète (Ds) dans une zone secrète (60) desdits moyens de mémorisation (6) ;

- une étape de remplacement utilisant la donnée secrète (Ds) pour remplacer chaque variable intermédiaire nécessaire aux phases de calcul du premier processus de calcul cryptographique en une pluralité (k) de variables intermédiaires partielles ;

- une étape d'application à chacune des variables intermédiaires partielles d'une table de transformation non-linéaire pour générer une pluralité de résultats partiels ; et

- une étape de reconstitution, à partir de la pluralité de résultats partiels, d'un résultat final correspondant au résultat qui aurait été obtenu par le premier processus de calcul cryptographique.

**2.** Procédé de sécurisation selon la revendication 1, **caractérisé en ce que**, pour chaque ensemble électronique et pour chaque clé secrète (Ks), la façon d'utiliser ladite donnée secrète (Ds), pour mener ledit calcul cryptographique, est publique.

**3.** Procédé de sécurisation, selon la revendication 1, d'un ou plusieurs ensembles électroniques mettant en oeuvre un processus de calcul cryptographique utilisant des transformations non linéaires de km bits sur kn bits décrites par k tables de conversion dans lesquelles n bits de sortie de la transformation sont lus à une adresse fonction des km bits d'entrée, **caractérisé en ce que**, pour chacune de ces transformations non linéaires, les k dites tables font partie de la donnée secrète (Ds).

**4.** Procédé de sécurisation selon la revendication 1, d'un ou plusieurs ensembles électroniques mettant en oeuvre un processus de calcul cryptographique utilisant des transformations non linéaires de km bits sur kn bits décrites par k tables de conversion dans lesquelles n bits de sortie de la transformation sont lus à une adresse obtenue par application d'une fonction bijective secrète ($\varphi$) à une valeur de m bits, elle-même obtenue par application d'une fonction publique des km bits d'entrée de la transformation non linéaire, **caractérisé en ce que**, pour chacune de ces transformations non linéaires, les k dites tables font partie de la donnée secrète (Ds).

**5.** Procédé de sécurisation, selon la revendication 1, **caractérisé en ce qu'**un programme de calcul de tables de conversion est mémorisé dans chaque ensemble électronique et déclenché par un événement déterminé pour calculer les tables et réaliser la mémorisation de tout ou partie de ces tables dans la donnée secrète.

**6.** Ensemble électronique (1) comportant des premiers moyens de mémorisation (6) pour stocker une clé secrète (Ks) de cryptage, des seconds moyens de mémorisation (7) pour stocker un algorithme cryptographique modifié respectant les phases de calcul d'un algorithme cryptographique de type connu et utilisant ladite clé secrète (Ks) de cryptage, des moyens (2) d'exécuter cet algorithme cryptographique modifié sur une information (E), **caractérisé en ce que** les premiers moyens de mémorisation (6) comportent une zone secrète (60) pour stocker une donnée secrète (Ds) et **en ce que** l'ensemble électronique (1) comporte des premiers moyens secrets de l'algorithme modifié permettant de remplacer chaque variable intermédiaire nécessaire aux phases de calcul de l'algorithme classique en une pluralité (k) de variables intermédiaires partielles et des seconds moyens de l'algorithme modifié permettant d'appliquer à chacune de ces variables intermédiaires partielles une table de transformation non linéaire et des troisièmes moyens secrets de l'algorithme modifié permettant de reconstituer le résultat final correspondant à l'utilisation de l'algorithme de cryptage à partir des résultats obtenus sur les variables partielles, les premiers moyens secrets étant agencés pour effectuer le remplacement de chaque variable intermédiaire par utilisation de la donnée secrète (Ds).

**7.** Ensemble électronique selon la revendication 6, **caractérisé en ce que** la donnée secrète (Ds) comporte au moins une première variable aléatoire $v_1$ constituant au moins une variable partielle secrète, l'algorithme modifié détermine au moins une autre variable partielle, par exemple $v_2$, par l'application d'une première fonction secrète sur la variable intermédiaire v et la ou les variables partielles secrètes $v_1$.

**8.** Ensemble électronique selon la revendication 6, **caractérisé en ce que** les premiers moyens secrets de l'algorithme modifié sont constitués par une fonction f, liant les variables intermédiaires partielles et chaque variable intermédiaire (v), telle que la connaissance d'une valeur de cette variable intermédiaire ne permet jamais de déduire l'ensemble des valeurs particulières partielles $v_i$ telles qu'il existe un (k-1)-uplet $(v_1, ..., v_i, v_{i+1}, ... v_k)$ satisfaisant à l'équation $f(v_1, ..., v_i, ..., v_k) = v$.

**9.** Ensemble électronique selon la revendication 6, **caractérisé en ce que** les seconds moyens de l'algorithme modifié sont constitués de k tables de conversion partielles et parmi les k tables de conversion partielle, k-1 tables de conversion partielle contiennent des variables aléatoires secrètes.

**10.** Ensemble électronique selon la revendication 6, **caractérisé en ce que** les seconds moyens de l'algorithme modifié comportent des moyens de remplacer chaque transformation non linéaire appliquée à une variable intermédiaire du processus de calcul cryptographique en l'absence de séparation, par une transformation non linéaire partielle de km bits sur kn bits appliquée sur l'ensemble des variables intermédiaires partielles, des moyens de calculer (k-1)n desdits bits de sortie de cette transformation comme fonction polynomiale des km bits d'entrée et des moyens de lecture des n bits restants desdits bits de sortie par lecture d'une table de conversion dans laquelle les n bits restants sont lus à une adresse qui est fonction des km bits d'entrée.

**11.** Ensemble électronique selon la revendication 6, **caractérisé en ce qu'**il comporte des moyens d'exécution simultanée des opérations effectuées dans les différentes parties issues de la séparation du processus de calcul cryptographique en plusieurs parties de processus de calcul distinctes, dans le cas de la multiprogrammation.

**12.** Ensemble électronique selon la revendication 6, **caractérisé en ce qu'**il comporte des moyens d'exécution simultanée dans des processeurs différents travaillant en parallèle des opérations effectuées dans les différentes parties issues de la séparation du processus de calcul cryptographique en plusieurs parties de processus de calcul distinctes.

**13.** Ensemble électronique selon la revendication 6, **caractérisé en ce qu'**il comprend un programme de calcul de tables de conversion mémorisé dans chaque ensemble électronique et des moyens de déclencher par un événement déterminé le calcul des tables et de réaliser la mémorisation de tout ou partie de ces tables dans la donnée secrète (Ds).

**Patentansprüche**

1. Sicherungsverfahren einer oder mehrerer elektronischer Baugruppen (1), bei dem ein und derselbe Kryptoalgorithmus mit Geheimschlüssel (Ks) zum Verschlüsseln eingesetzt wird, wobei jede elektronische Baugruppe (1) Speichermittel (6) zum Speichern des besagten Geheimschlüssels (Ks) zum Verschlüsseln und eine Verarbeitungseinheit (2) zum Ausführen des besagten Kryptoalgorithmus an einer Information (E) umfaßt und das Verfahren Rechenphasen eines ersten kryptographischen Rechenprozesses bekannter Art umfaßt, bei dem der besagte Geheimschlüssel (Ks) zum Verschlüsseln und die besagte Information (E) angewendet werden und das **dadurch gekennzeichnet ist, daß** es für jede elektronische Baugruppe (1) folgendes umfaßt:

   - einen Speicherschritt von geheimen Daten (Ds) in einer geheimen Zone (60) der besagten Speichermittel (6);
   - einen Ersatzschritt, bei dem die geheimen Daten (Ds) zum Ersatz jeder Zwischenvariable angewendet werden, die für die Rechenphasen des ersten kryptographischen Rechenprozesses erforderlich ist, in eine Vielzahl (k) von partiellen Zwischenvariablen;
   - einen Applikationsschritt an jeder der partiellen Zwischenvariablen einer nicht-linearen Konvertierungstabelle, um eine Vielzahl von Teilergebnissen zu erzielen; und
   - einen Wiederherstellungsschritt ausgehend von der Vielzahl von Teilergebnissen eines Endergebnisses, das dem Ergebnis entspricht, das durch den ersten kryptographischen Rechenprozeß erreicht worden wäre.

2. Sicherungsverfahren nach Anspruch 1, **dadurch gekennzeichnet, daß** für jede elektronische Baugruppe und für jeden Geheimschlüssel (Ks) die Art und Weise wie die besagten Geheimdaten (Ds) zur Ausführung der besagten kryptographischen Berechnung angewendet werden, nicht geheim ist.

3. Sicherungsverfahren nach Anspruch 1 einer oder mehrerer elektronischer Baugruppen unter Einsatz eines kryptographischen Rechenprozesses, bei dem durch k Konvertierungstabellen beschriebene nicht-lineare Konvertierungen von km Bits zu kn Bits angewendet werden, in denen n Ausgabebits der Konvertierung an einer Funktionsadresse der km Eingabebits abgelesen werden, **dadurch gekennzeichnet, daß** bei jeder dieser nicht-linearen Konvertierungen die besagten k Tabellen Bestandteil der geheimen Daten (Ds) sind.

4. Sicherungsverfahren nach Anspruch 1 einer oder mehrerer elektronischer Baugruppen unter Einsatz eines kryptographischen Rechenprozesses, bei dem durch k Konvertierungstabellen beschriebene nicht-lineare Konvertierungen von km Bits zu kn Bits angewendet werden, in denen n Ausgabebits der Konvertierung an einer Adresse abgelesen werden, die durch Anwendung einer geheimen bijektiven Funktion (φ) auf einen Wert von m Bits erreicht wird, der selbst durch Anwendung einer nicht geheimen Funktion der km Eingabebits der nicht-linearen Konvertierung erreicht wird, **dadurch gekennzeichnet, daß** bei jeder dieser nicht-linearen Konvertierungen besagte k Tabellen Bestandteil der geheimen Daten (Ds) sind.

5. Sicherungsverfahren nach Anspruch 1, **dadurch gekennzeichnet, daß** ein Rechenprogramm für Konvertierungstabellen in jeder elektronischen Baugruppe gespeichert ist und durch ein bestimmtes Ereignis ausgelöst wird, um die Tabellen zu berechnen und das Speichern aller oder Teile dieser Tabellen in den geheimen Daten zu vollziehen.

6. Elektronische Baugruppe (1) mit ersten Speichermitteln (6), um einen Geheimschlüssel (Ks) zum Verschlüsseln zu speichern, zweiten Speichermitteln (7), um einen modifizierten Kryptoalgorithmus zu speichern, der die Rechenphasen eines Kryptoalgorithmus bekannter Art einhält und besagten Geheimschlüssel (Ks) zum Verschlüsseln anwendet, mit Mitteln (2) zum Ausführen dieses modifizierten Kryptoalgorithmus an einer Information (E), **dadurch gekennzeichnet, daß** die ersten Speichermittel (6) eine geheime Zone (60) zum Speichern von geheimen Daten (Ds) umfassen und **dadurch**, daß die elektronische Baugruppe (1) erste geheime Mittel des modifizierten Algorithmus umfaßt, durch die jede für die Rechenphasen des klassischen Algorithmus erforderliche Zwischenvariable durch eine Vielzahl (k) von partiellen Zwischenvariablen ersetzt werden kann und zweite Mittel des modifizierten Algorithmus ermöglichen, an jeder dieser partiellen Zwischenvariablen eine nicht-lineare Konvertierungstabelle anzuwenden, sowie dritte geheime Mittel des modifizierten Algorithmus ermöglichen, des Endergebnis entsprechend der Anwendung des Verschlüsselungsalgorithmus ausgehend von an partiellen Variablen erhaltenen Ergebnissen wieder herzustellen, wobei die ersten geheimen Mittel angeordnet sind, um das Ersetzen jeder Zwischenvariable durch Anwendung der geheimen Daten (Ds) zu vollziehen.

**7.** Elektronische Baugruppe nach Anspruch 6, **dadurch gekennzeichnet, daß** die geheimen Daten (Ds) mindestens eine erste zufällige Variable $v_1$ umfassen, die mindestens eine geheime partielle Variable bildet, daß der modifizierte Algorithmus durch Anwendung einer ersten geheimen Funktion an der Zwischenvariablen v und der oder den geheimen partiellen Variablen $v_1$ mindestens eine andere partielle Variable bestimmt, z. B. $v_2$.

**8.** Elektronische Baugruppe gemäß Anspruch 6, **dadurch gekennzeichnet, daß** die ersten geheimen Mittel des modifizierten Algorithmus aus einer Funktion f bestehen, die die partiellen Zwischenvariablen und jede Zwischenvariable (v) verbindet, sodass die Kenntnis eines Werts dieser Zwischenvariablen nie ermöglicht, alle einzelnen Teilwerte $v_i$ abzuleiten und ein (k-1) Tupel $(v_1, ..., v_i, v_{i+1}, ... v_k)$ besteht, das die Gleichung $f(v_1, ..., v_i, ..., v_k) = v$ erfüllt.

**9.** Elektronische Baugruppe gemäß Anspruch 6, **dadurch gekennzeichnet, daß** die zweiten Mittel des modifizierten Algorithmus aus k partiellen Konvertierungstabellen bestehen und von diesen k Tabellen der partiellen Konvertierung k-1 Tabellen der partiellen Konvertierung geheime zufällige Variablen enthalten.

**10.** Elektronische Baugruppe gemäß Anspruch 6, **dadurch gekennzeichnet, daß** die zweiten Mittel des modifizierten Algorithmus Mittel zum Ersetzen jeder an einer Zwischenvariable des kryptographischen Rechenprozesses angewendeten nicht-linearen Konvertierung bei fehlender Unterteilung durch eine partielle nicht-lineare Konvertierung von km Bits zu kn Bits umfaßt, die bei allen partiellen Zwischenvariablen angewendet wird, sowie Mittel zum Berechnen von (k-1)n der besagten Ausgabebits dieser Konvertierung als polynomiale Funktion der km Eingabebits und Mittel zum Ablesen der n verbleibenden Bits der besagten Ausgabebits durch Ablesen einer Konvertierungstabelle, in der die n verbleibenden Bits an einer Adresse abgelesen werden, die von den km Eingabebits abhängt.

**11.** Elektronische Baugruppe nach Anspruch 6, **dadurch gekennzeichnet, daß** sie im Fall der Mehrfachprogrammierung Mittel zur gleichzeitigen Ausführung der in den verschiedenen Abschnitten aus der Unterteilung des kryptographischen Rechenprozesses in mehrere verschiedene Rechenprozeßteile hervorgehenden Operationen umfaßt.

**12.** Elektronische Baugruppe nach Anspruch 6, **dadurch gekennzeichnet, daß** sie Mittel zur gleichzeitigen Ausführung in den einzelnen Prozessoren umfaßt, die parallel die in den einzelnen Abschnitten durchgeführten Operationen bearbeiten, die aus der Unterteilung des kryptographischen Rechenprozesses in mehrere verschiedene Rechenprozeßteile hervorgehen.

**13.** Elektronische Baugruppe nach Anspruch 6, **dadurch gekennzeichnet, daß** sie ein Rechenprogramm für Konvertierungstabellen umfaßt, das in jeder elektronischen Baugruppe gespeichert ist sowie Mittel zum Auslösen durch ein bestimmtes Ereignis der Berechnung der Tabellen und zur Durchführung der Speicherung der gesamten Tabellen oder Teilen davon in den geheimen Daten (Ds).

**Claims**

**1.** Method for making secure one or several electronic installations (1) implementing a cryptographic algorithm with secret encryption key (Ks), each electronic installation (1) including storage means (6) to store said secret encryption key (Ks) and a processing unit (2) to execute said cryptographic algorithm on information (E), the method comprising phases to calculate a first cryptographic calculation process of known type using said secret encryption key (Ks) and said information (E) and being **characterised in that** it comprises, for each electronic installation (1):

- a step to store secret data (Ds) in a secret area (60) of said storage means (6);
- a replacement step using the secret data (Ds) to replace each intermediate variable required in the calculation phases of the first cryptographic calculation process by a number (k) of partial intermediate variables;
- a step to apply to each of the partial intermediate variables a non-linear transformation table to generate a number of partial results; and
- a step to recreate, using the partial results, a final result corresponding to the result which would have been obtained by the first cryptographic calculation process.

2. Method for making secure, according to claim 1, **characterised in that**, for each electronic installation and for each secret key (Ks), the way said secret data (Ds) is used to perform said cryptographic calculation, is public.

3. Method for making secure, according to claim 1, one or several electronic installations implementing a cryptographic calculation process using non-linear transformations of km bits on kn bits described by k conversion tables in which the n output bits of the transformation are read at an address which depends on the km input bits, **characterised in that**, for each of these non-linear transformations, said k tables are part of the secret data (Ds).

4. Method for making secure, according to claim 1, one or several electronic installations implementing a cryptographic calculation process using non-linear transformations of km bits on kn bits described by k conversion tables in which the n output bits of the transformation are read at an address obtained by applying a secret bijective function ($\varphi$) to a value of m bits, itself obtained by applying a public function of the km input bits of the non-linear transformation, **characterised in that**, for each of these non-linear transformations, said k tables are part of the secret data (Ds).

5. Method for making secure, according to claim 1, **characterised in that** a program to calculate conversion tables is stored in each electronic installation and triggered by a given event to calculate the tables and store all or some of these tables in the secret data.

6. Electronic installation (1) including first storage means (6) to store a secret encryption key (Ks), second storage means (7) to store a modified cryptographic algorithm respecting the calculation phases of a cryptographic algorithm of known type and using said secret encryption key (Ks), means (2) to execute this modified cryptographic algorithm on information (E), **characterised in that** the first storage means (6) include a secret area (60) to store a secret data item (Ds) and **in that** the electronic installation (1) includes first secret means of the modified algorithm used to replace each intermediate variable required in the calculation phases of the traditional algorithm by a number (k) of partial intermediate variables and second means of the modified algorithm to apply to each of these partial intermediate variables a non-linear transformation table and third secret means of the modified algorithm to recreate the final result corresponding to the use of the encryption algorithm from the results obtained on the partial variables, the first secret means being designed to replace each intermediate variable using the secret data (Ds).

7. Electronic installation according to claim 6, **characterised in that** the secret data item (Ds) includes at least one first random variable $v_1$ forming at least one secret partial variable, the modified algorithm determines at least one other partial variable, for example $v_2$, by applying a first secret function on the intermediate variable v and the secret partial variable(s) $v_1$.

8. Electronic installation according to claim 6, **characterised in that** the first secret means of the modified algorithm consist of a function f, linking the partial intermediate variables and each intermediate variable (v) such that knowledge of a value of this intermediate variable is never sufficient to deduce the set of partial individual values $v_i$ such that there exists a (k-1)-uplet ($v_1$, ..., $v_i$, $v_{i+1}$, ... $v_k$) satisfying the equation f($v_1$, ..., $v_i$, ..., $v_k$) = v.

9. Electronic installation according to claim 6, **characterised in that** the second means of the modified algorithm consist of k partial conversion tables and amongst the k partial conversion tables, k-1 partial conversion tables contain secret random variables.

10. Electronic installation according to claim 6, **characterised in that** the second means of the modified algorithm include means to replace each non-linear transformation applied to an intermediate variable of the cryptographic calculation process, in the absence of separation, by a partial non-linear transformation of km bits on kn bits applied to all the partial intermediate variables, means to calculate said (k-1)n output bits of this transformation as a polynomial function of the km input bits and means to read the remaining n bits of said output bits by reading a conversion table in which the remaining n bits are read at an address which depends on the km input bits.

11. Electronic installation according to claim 6, **characterised in that** it includes means for simultaneous execution of operations carried out in the various parts resulting from the separation of the cryptographic calculation process into separate calculation process sections, if multiprogramming is used.

12. Electronic installation according to claim 6, **characterised in that** it includes means for simultaneous execution in various processors working in parallel of operations carried out in the various parts resulting from the separation of the cryptographic calculation process into several separate calculation process sections.

13. Electronic installation according to claim 6, **characterised in that** it comprises a program to calculate conversion tables stored in each electronic installation and means to trigger by a given event the calculation of the tables and store all or some of these tables in the secret data item (Ds).

FIG 1

FIG 4F

ENTREE

$K_S = K_1 \, K_2 \, \ldots \, K_{16}$

E

IP

$L_0$       $R_0$

$K_1$   1$^{er}$ TOUR

F

$L_1 = R_0$      $R_1 = L_0 \oplus F(R_0, K_1)$

$K_2$   2$^{eme}$ TOUR

F

$L_2 = R_1$      $R_2 = L_1 \oplus F(R_1, K_2)$

$L_{15} = R_{14}$      $R_{15} = L_{14} \oplus F(R_{14}, K_{15})$

$K_{16}$

F

16$^{eme}$ TOUR

$R_{16} = L_{15} \oplus F(R_{15}, K_{16})$      $L_{16} = R_{15}$

IP$^{-1}$

FIG 2A

$M_c$

SORTIE

Calcul de F(R$_{i-1}$, k$_i$)

| 31 | 30 | 29 | 28 | 27 | 26 | 25 | 24 | 23 | 22 | 21 | 20 | 19 | 18 | 17 | 16 | 15 | 14 | 13 | 12 | 11 | 10 | 9 | 8 | 7 | 6 | 5 | 4 | 3 | 2 | 1 | 0 | R$_{i-1}$

Permutation + Expansion E

| 0 | 31 | 30 | 29 | 28 | 27 | 28 | 27 | 26 | 25 | 24 | 23 | 24 | 23 | 22 | 21 | 20 | 19 | 20 | 19 | 18 | 17 | 16 | 15 | 16 | 15 | 14 | 13 | 12 | 11 | 12 | 11 | 10 | 9 | 8 | 7 | 8 | 7 | 6 | 5 | 4 | 3 | 4 | 3 | 2 | 1 | 0 | 31 | R'$_{i-1}$

⊕← Ki   ⊕← Ki   ⊕← Ki   ⊕← Ki   ⊕← Ki   ⊕← Ki   ⊕← Ki   ⊕← Ki

| 47 | 46 | 45 | 44 | 43 | 42 | 41 | 40 | 39 | 38 | 37 | 36 | 35 | 34 | 33 | 32 | 31 | 30 | 29 | 28 | 27 | 26 | 25 | 24 | 23 | 22 | 21 | 20 | 19 | 18 | 17 | 16 | 15 | 14 | 13 | 12 | 11 | 10 | 9 | 8 | 7 | 6 | 5 | 4 | 3 | 2 | 1 | 0 | R''$_{i-1}$

Boîtes S (m⌄n)   | S1 | | S2 | | S3 | | S4 | | S5 | | S6 | | S7 | | S8 |

| 23 | 15 | 9 | 1 | 19 | 4 | 30 | 14 | 8 | 16 | 2 | 26 | 6 | 12 | 22 | 31 | 24 | 18 | 7 | 29 | 28 | 3 | 21 | 13 | 0 | 20 | 10 | 25 | 27 | 5 | 17 | 11 |

FIG. 2B

Permutation P

| 31 | 30 | 29 | 28 | 27 | 26 | 25 | 24 | 23 | 22 | 21 | 20 | 19 | 18 | 17 | 16 | 15 | 14 | 13 | 12 | 11 | 10 | 9 | 8 | 7 | 6 | 5 | 4 | 3 | 2 | 1 | 0 | F(R$_{i-1}$, k$_i$)

EP 1 086 547 B1

Valeur d'entrée E
et clé secrète $K_s$

a) séparation  $\boxed{\text{PPC}_1}$  $\boxed{\text{PPC}_2}$  $\boxed{\text{PPC}_3}$  $\boxed{\text{PPC}_{k-1}}$  $\boxed{\text{PPC}_k}$

$v_1$  $v_2$  $v_3$  $v_{k-1}$  $v_k$

b) reconstitution  $v = f(v_1, v_2, v_3, ...., v_{k-1}, v_k)$

$v$

FIG 3

$$v^{'} = S(v)$$

FIG 4A

$$v^{'}_{1} = A(v_1, v_2)$$

$$v^{'}_{2} = S(v_1 \oplus v_2) \oplus A(v_1, v_2)$$

FIG 4B

E

a₁) séparation
k parties

| $V_1$ (m bits) | $V_2$ (m bits) | ... $V_{k-1}$ (m bits) | $V_k$ (m bits) |

a₂) transformations
non linéaires
partielles

| Table N°1 | Table N°2 | ... Table N°(k-1) | Table N°k | $k_{m \times n}$ |

| $V'_1$ (n bits) | $V'_2$ (n bits) | ... $V'_{k-1}$ (n bits) | $V'_k$ (n bits) |

FIG 4C

FIG 4D

EP 1 086 547 B1

E

$a_1$) séparation
k parties

$v_1$
(m bits)

$v_2$
(m bits)

$v_{k-1}$
(m bits)

$v_k$
(m bits)

FIG 4E

$a_1$) Transformation
non linéaire

Calcul de
$\varphi_1 \circ f(v_1,...v_k)$
$\varphi_1$ fonction
bijective
secrète

$b_1$

Calcul de
$\varphi_2 \circ f(v_1,...v_k)$
$\varphi_2$ fonction
bijective
secrète

$b_2$
$b_{k-1}$

Calcul de
$\varphi_{k-1} \circ f(v_1,...v_k)$
$\varphi_{k-1}$ fonction
bijective
secrète

Calcul de
$\varphi_k \circ f(v_1,...v_k)$
$\varphi_k$ fonction
bijective
secrète

$b_k$

(m bits)

(m bits)

(m bits)

(m bits)

Table
N°1

Table
N°2

Table
N°(k-1)

Table
N°k

$v'_1$
(n bits)

$v'_2$
(n bits)

$v'_{k-1}$
(n bits)

$v'_k$
(n bits)